# EUROPEAN PATENT APPLICATION

(11) **EP 3 056 653 A1**
(43) Date of publication of application: **17.08.2016**
(21) Application number: 16155518.0
(22) Date of filing: 12.02.2016
(51) Int. Cl.: E06B 11/08

(54) **ACCESS CONTROL DEVICE**

(30) Priority: 16.02.2015 IT BO20150069
(71) Applicant: Plexa S.r.l., 40065 Pianoro (BO) (IT)
(72) Inventor: RODA, Gabriele, 40037 SASSO MARCONI BO (IT)
(74) Representative: Modiano, Micaela Nadia

(57) **Abstract**

An access control device (1), comprising a supporting structure (2) and a horizontal arm (3), an actuator (4) being interposed between the structure (2) and the arm (3) for the controlled rotation of the arm (3) with respect to the structure (2), the arm (3) comprising a first portion (5) that rotates with respect to the supporting structure (2) and a second portion (6) that protrudes transversely from the structure (2), an elastic means (7) having a predefined elastic constant being interposed between the first portion (5) and the second portion (6).

## Description

The present invention relates to an access control device: the present invention has an ideal application in particular for controlling the access of users to public means of transportation such as buses, trains, trams, and the like.

These devices are usually constituted by a supporting structure and by an arm, in which the controlled rotation thereof with respect to the structure is performed by an actuator.

It is known that these devices are often the subject of vandalism by users who, since they lack a regular travel ticket, attempt to force the access devices, in particular by twisting and bending the arm that obstructs the passage, causing its breakage with consequent repair costs.

The aim of the present invention is to solve the problems described above, by devising an access control device that is subject to a limited probability of breakage caused by vandalism.

Within this aim, an object of the invention is to devise an access control device that is subject to reduced maintenance costs.

Another object of the present invention is to provide an access control device that has low costs, is relatively simple to provide in practice and is safe in application.

This aim and these and other objects are achieved by an access control device, comprising a supporting structure and a horizontal arm, an actuator being interposed between said structure and said arm for the controlled rotation of said arm with respect to said structure, characterized in that said arm comprises a first portion that rotates with respect to said supporting structure and a second portion that protrudes transversely from said structure, an elastic means having a predefined elastic constant being interposed between said first portion and said second portion.

Further characteristics and advantages of the invention will become better apparent from the description of a preferred but not exclusive embodiment of an access control device according to the invention, illustrated by way of nonlimiting example in the accompanying drawings, wherein:

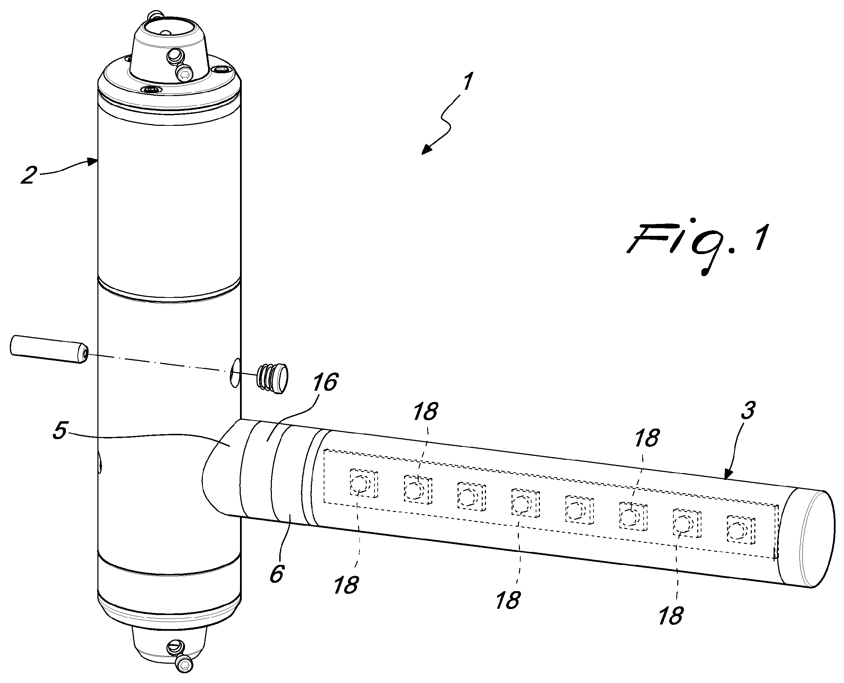

Figure 1 is a perspective view of the access control device according to the invention;

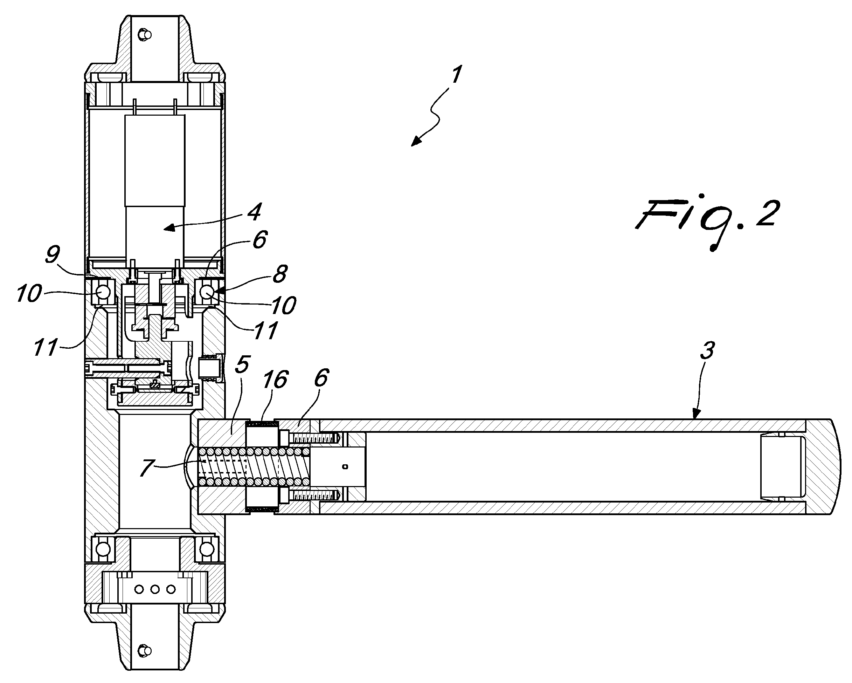

Figure 2 is a sectional view, taken along a plane that is perpendicular to the arm, of the access control device according to the invention;

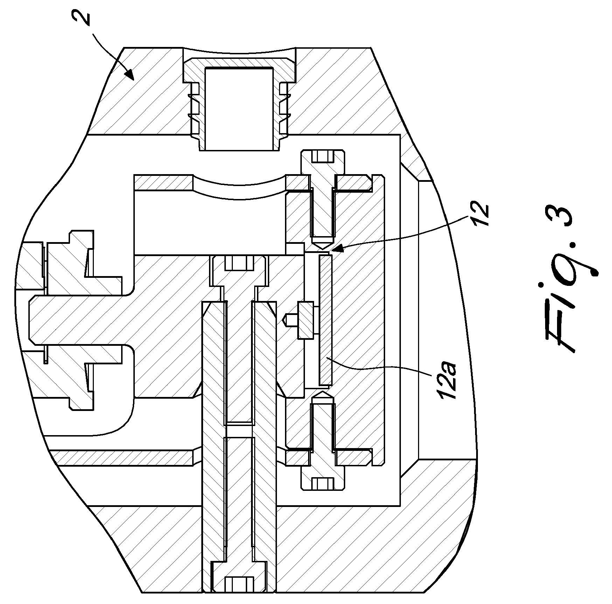

Figure 3 is an enlarged-scale view of a detail of Figure 2;

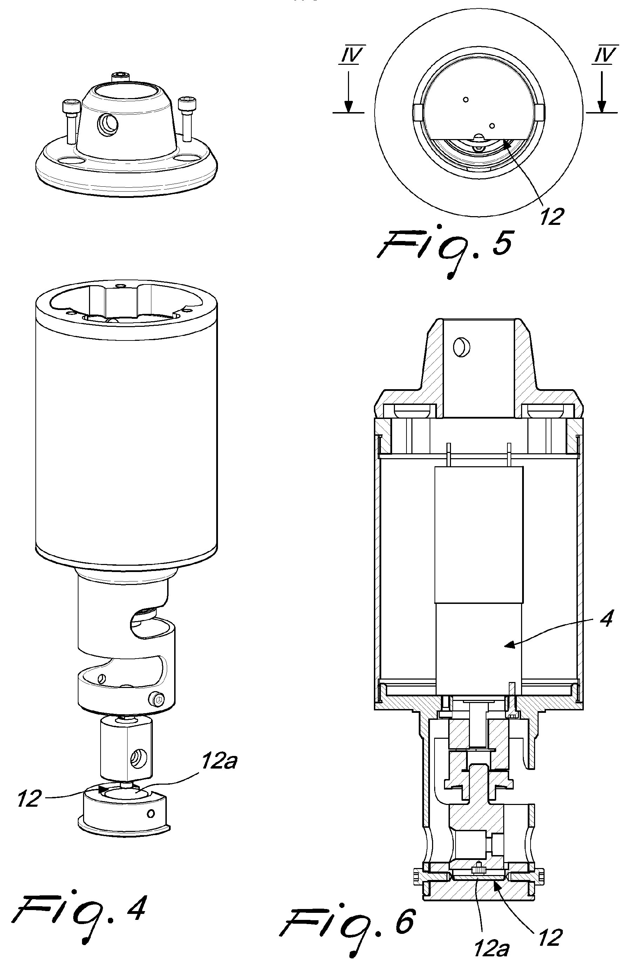

Figure 4 is an exploded view of a component of the access control device according to the invention;
Figure 5 is a top plan view of the component of the access control device according to the invention;
Figure 6 is a sectional view of Figure 5, taken along the line IV-IV;

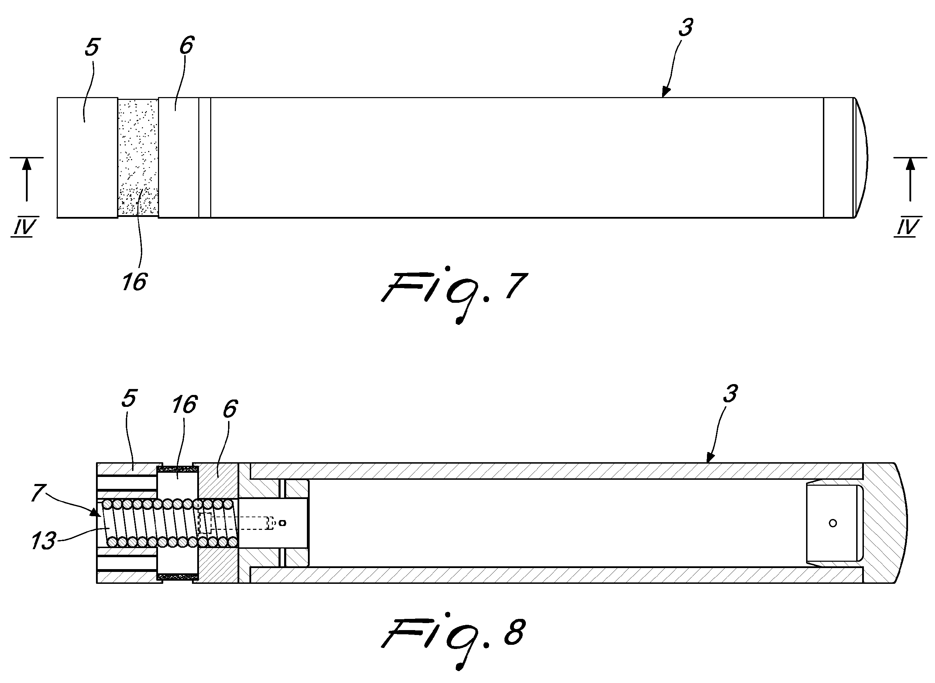

Figure 7 is a top plan view of the arm of the access control device according to the invention;
Figure 8 is a sectional view of Figure 7, taken along the line IV-IV;

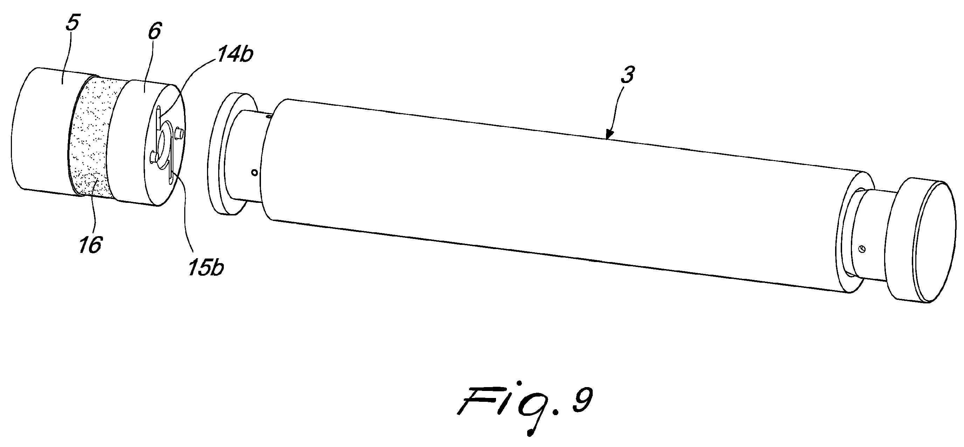

Figure 9 is an exploded view of the arm of the access control device according to the invention;

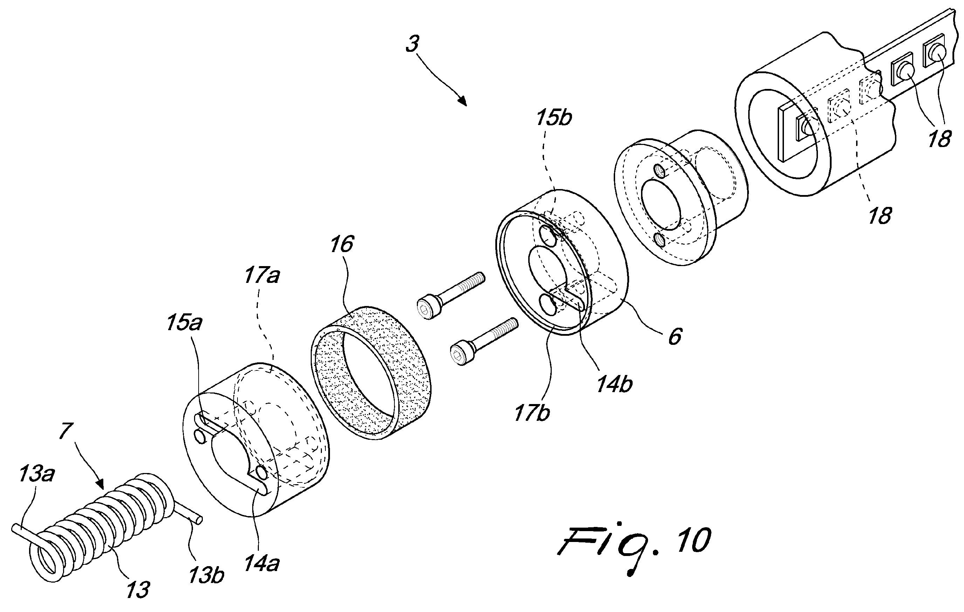

Figure 10 is an exploded perspective view, taken at a first angle, of a detail of the arm of the access control device according to the invention;

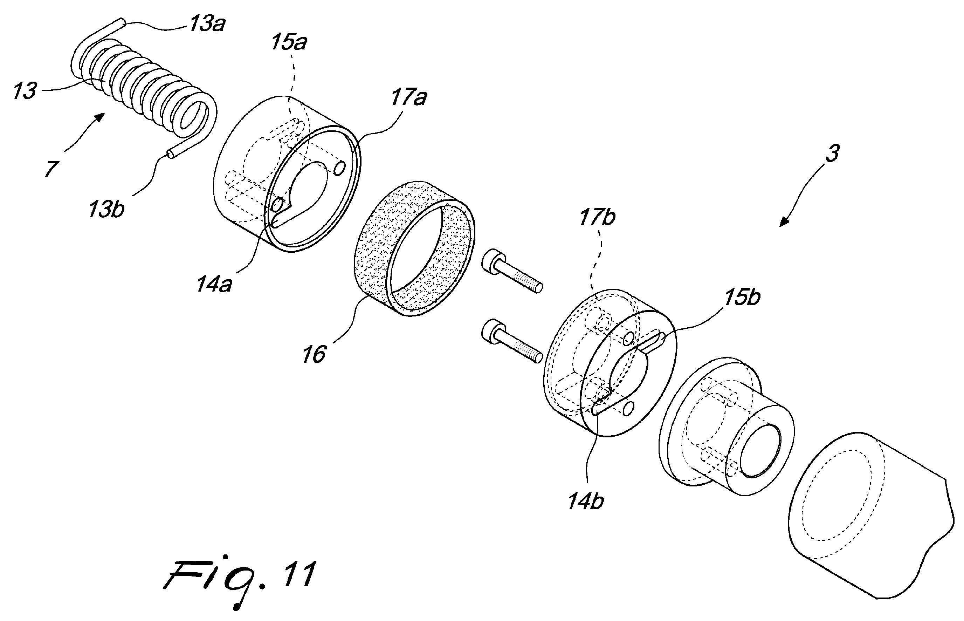

Figure 11 is an exploded view, taken at a second angle, of a detail of the arm of the access control device according to the invention.

With reference to the figures cited above, the reference numeral 1 generally designates an access control device, which comprises a supporting structure 2 and a horizontal arm 3.

An actuator 4 for the controlled rotation of the arm 3 with respect to the structure 2 is interposed between the structure 2 and the arm 3.

According to the invention, the arm 3 comprises a first portion 5, which rotates with respect to the supporting structure 2, and a second portion 6, which protrudes transversely from the structure 2.

An elastic means 7 having a predefined elastic constant is interposed between the first portion 5 and the second portion 6.

The value of the elastic constant of the elastic means 7 is therefore such as to allow the arm 3 to remain, in normal operating conditions, in the horizontal position and, if forced, to allow a flexing thereof, even a very extensive one, in order to prevent it from breaking or cracking.

More particularly, at least one mechanical clutch 8 can be interposed between the actuator 4 and the first portion 5 of the arm 3.

The clutch 8 can comprise a first disk 9, which is integral with the structure 2 and is provided with a plurality of first partial seats for respective balls 10, which is coupled axially to a second disk 11, which is integral with the first portion 5 and is provided with corresponding second partial seats for the balls 10.

The rotation of the second disk 11 on the part of the actuator 4 with respect to the first disk 9 causes the exit of each one of the balls 10 from a seat defined by a first partial seat and a second partial seat and the insertion in a subsequent seat.

This exit occurs, therefore, by elastic deformation of the partial seats.

It is further possible to adjust the mechanical clutch 8 by varying the distance between the first disk 9 and the second disk 11, or by varying the mutual compression of the two disks 9 and 11 on the balls 10.

It is convenient to specify that it is possible to interpose, between the first portion 5 and the structure 2, an element 12 for controlling the angular position of the arm 3 of the type of an encoder.

According to a preferred solution, the encoder can be of the absolute magnetic type.

According to the preferred solution, the encoder can comprise a sensor which, by detecting teeth or, as an alternative, holes provided in a metallic plate 12a, allows to encode the exact instantaneous position of the arm 3 with respect to the structure 2.

Therefore, the presence of the mechanical clutch 8 allows to keep the position of the arm 3, controlled by the encoder, constantly consistent.

According to the constructive solution shown in the accompanying figures, the elastic means 7 can comprise a helical spring 13, the ends of which are coupled stably respectively to the first portion 5 and to the second portion 6.

According to the solution shown in the accompanying figures, the first portion 5 and the second portion 6 can have a through hole 14a and 14b, which is contoured for the passage of the helical spring 13, and a recess 15a and 15b for the stable accommodation respectively of an end portion 13a and 13b of the spring 13.

The portions 13a and 13b can be arranged in a radial direction with respect to the spring 13 and can protrude with respect to the turns of the spring 13.

It is possible to interpose between the first portion 5 and the second portion 6 a deformable tubular element 16 for covering the elastic means 7, suitable to prevent accidental direct contact with it by the user.

More particularly, the first portion 5 and the second portion 6 can have an annular recess 17a and 17b inside which the tubular element 16 can be anchored. In this manner, even if the arm 3 bends, as a consequence of forcing, the tubular element 16 remains in the correct protection position.

The presence of the tubular element 16 therefore prevents the user for example from crushing his/her fingers by inserting them in the turns of the helical spring 13 when the arm 3 is bent as a consequence of forcing thereof.

During installation, initially, the first portion 5 is mated to the structure 2 and then the spring 13 is mated to the second portion 6.

This second operation can be performed by introducing the spring 13 in the contoured hole 14b and then, by means of a rotation thereof about its own axis, inserting the end portion 13b within the recess 15b; in this manner the spring 13 is locked, preventing its accidental exit.

At this point the spring 13 is covered with the tubular element 16, taking care to insert it within the respective annular recesses 17a and 17b.

One then proceeds by mating the spring 13, and therefore the arm 3, with the first portion 5.

In this case also, the spring 13 is inserted in the hole 14a and then, by compression and rotation through approximately 180° of the spring 13 about its own axis and therefore of the arm 13 that is integral therewith, the end portion 13a of the spring 13 is inserted within the recess 15a.

This last operation therefore allows to lock the spring 13 between the two portions 5 and 6.

The possibility to use means for adjusting the elastic constant of the helical spring 13 is not excluded.

The device 1 according to the invention can comprise a sensor adapted to detect the deformation of the elastic means 7 and therefore the forcing of the arm 3.

Furthermore, the sensor can be controlled by a control and management unit for the control of at least one signaling apparatus, preferably of the type of a light source, a siren, a screen for displaying alarm messages, and the like.

The arm 3 can be made at least partially of transparent material.

According to a preferred constructive solution, the arm 3 can be made at least partially of transparent polycarbonate.

Furthermore, the arm 3 can be provided with at least one light source 18 that emits a light beam of predefined color.

The source 18 can be polychrome or there can be one or more monochrome light sources 18.

In particular, the light source 18 can take on two different colors, such as for example those of the traffic signal type, wherein the green signal indicates that recognition of an encoded medium has occurred and therefore the user is allowed access, and red indicates that recognition of the encoded medium has not occurred and consequently the user is denied access.

The possibility that the arm 3 may comprise a display screen, for example for displaying information or advertising messages and the like, is not excluded.

The actuator 4 can be controlled by an assembly for reading an encoded medium available to the user. Such encoded medium can be of the type of an electronic card, a ticket provided with a chip, a magnetic band, a transponder, and the like.

Advantageously, the access control device 1 is subject to a limited probability of breakage caused by vandalism.

Positively, the access control device 1 is subject to reduced maintenance costs.

In fact, the presence of the elastic means 7 prevents the arm 3, even if forced, from being able to flex without breaking or cracking, so that it does not have to be repaired or replaced, with the consequent onset of further costs.

The invention thus conceived is susceptible of numerous modifications and variations, all of which are within the scope of the appended claims; all the details may further be replaced with other technically equivalent elements.

In the examples of embodiment shown, individual characteristics, given in relation to specific examples, may actually be interchanged with other different characteristics that exist in other examples of embodiment.

In practice, the materials used, as well as the dimensions, may be any according to requirements and to the state of the art.

The disclosures in Italian Patent Application No. BO2015A000069 (102015902330452) from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An access control device, comprising a supporting structure (2) and a horizontal arm (3), an actuator (4) being interposed between said structure (2) and said arm (3) for the controlled rotation of said arm (3) with respect to said structure (2), **characterized in that** said arm (3) comprises a first portion (5) that rotates with respect to said supporting structure (2) and a second portion (6) that protrudes transversely from said structure (2), an elastic means (7) having a predefined elastic constant being interposed between said first portion (5) and said second portion (6).

2. The access control device according to claim 1, **characterized in that** at least one mechanical clutch (8) is interposed between said actuator (4) and said first portion (5) of said arm (3) and comprises a first disk (9) that is integral with said structure (2) and is provided with a plurality of first partial seats for respective balls (10) and coupled axially to a second disk (11) that is integral with said first portion (5), provided with corresponding second partial seats for said balls (10), the rotation of said second disk (11) with respect to said first disk (9) causing the exit of each one of said balls (10) from a seat, defined by a first partial seat and a second partial seat, and the insertion in a subsequent seat, exit occurring by elastic deformation of said partial seats.

3. The access control device according to claim 1, **characterized in that** an element (12) for controlling the angular position of said arm (3), such as an encoder, is interposed between said first portion (5) and said structure (2).

4. The access control device according to claim 1, **characterized in that** said elastic means (7) comprises a helical spring (13), the ends of which are coupled stably respectively to said first portion (5) and to said second portion (6).

5. The access control device according to claim 1, **characterized in that** said first portion (5) and said second portion (6) are provided with a through hole (14a, 14b) that is contoured for the passage of said helical spring (13) and a recess (15a, 15b) for stable accommodation respectively of the end portions (13a, 13b) of said spring (13), said portions (13a, 13b) being arranged in a radial direction with respect to said spring (13) and protruding with respect to the turns of said spring (13).

6. The access control device according to claim 1, **characterized in that** a deformable tubular element (16) is interposed between said first portion (5) and said second portion (6) to cover said elastic means (7) adapted to prevent accidental direct contact therewith by the user.

7. The access control device according to claim 1, **characterized in that** it comprises a sensor that is adapted to detect the deformation of said elastic means (7).

8. The access control device according to claim 1, **characterized in that** said arm (3) is made at least partially of transparent material, said arm (3) being provided with at least one light source (18), said at least one source (18) emitting a light beam of predefined colors.

9. The access control device according to one or more of the preceding claims, **characterized in that** said actuator (4) is activated by an assembly for reading an encoded medium that is available to the user.
